# EUROPÄISCHE PATENTANMELDUNG

(11) **EP 3 772 843 A1**
(43) Veröffentlichungstag der Anmeldung: **10.02.2021**
(21) Anmeldenummer: 20185215.9
(22) Anmeldetag: 10.07.2020
(51) Int. Cl.: H04L 29/06

(54) **VERFAHREN UND KOMMUNIKATIONSEINRICHTUNG ZUR DATENÜBERTRAGUNG ZWISCHEN NETZWERKEN, INSBESONDERE MIT UNTERSCHIEDLICHER SICHERHEITSANFORDERUNGEN**

(30) Priorität: 06.08.2019 DE 102019211787
(71) Anmelder: Siemens Mobility GmbH, 81739 München (DE)
(72) Erfinder: Falk, Rainer, 85586 Poing (DE); Lorenz, Matthias, 38159 Vechelde (DE); Otto, Christina, 81739 München (DE); Patzlaff, Heiko, 80799 München (DE); Wimmer, Martin, 85579 Neubiberg (DE)

(57) **Zusammenfassung**

Die Erfindung beansprucht ein Verfahren zur Datenübertragung zwischen Netzwerken, insbesondere mit unterschiedlicher Sicherheitsanforderungen, wobei
- für eine Datenübertragung von einem ersten Netzwerk (NW1) in ein zweites Netzwerk (NW2) Daten mithilfe physikalischen Abtastens durch wenigstens eine Abtasteinheit (PHY), die zwischen dem ersten Netzwerk (NW1) und dem zweiten Netzwerk (NW2) angeordnet ist, an zumindest eine Filtereinheit übertragen werden
und
- wobei die abgetasteten Daten direkt nach dem Abtasten anhand zumindest einer vorgegebenen Regel (R) in der Filtereinheit (F) geprüft werden und
- bei positivem Prüfungsergebnis die Daten in das zweite Netzwerk (NW2) übertragen werden.

## Beschreibung

Die Erfindung betrifft ein Verfahren und eine Kommunikationseinrichtung zur Datenübertragung zwischen Netzwerken, insbesondere solche mit unterschiedlichen Sicherheitsanforderungen.

Zur sicheren Kommunikation zwischen zwei oder mehreren Netzwerken, insbesondere einem sicherheitskritischen und einem offenen Netzwerk, wie z.B. einem industriellen Steuerungsnetzwerk (engl. Industrial Control Network oder Operational Network) und einem klassischen IT-Netzwerk, können beispielsweise Einwegkommunikationseinheiten, wie z.B. Datendioden, eingesetzt werden, um eine unidirektionale Datenübertragung zu ermöglichen. Eine Datendiode mit Feedbackkanal, auch als bidirektionaler Network Guard oder Security Gateway bezeichnet, ermöglicht einen sicheren Datentransfer zwischen zwei Informationsbereichen mit unterschiedlichen Sicherheitsstufen. Eine Data Capture Unit (DCU, www.siemens.com/dcu) repräsentiert einen rückwirkungsfreien Netzwerk-Tap, über den sich kosteneffizient unidirektionale Datentransfers realisieren lassen.

Netzwerktaps und Edge-Devices werden im Rahmen von Digitalisierungsinitiativen häufig verwendet, um Daten (Netzwerkkommunikation, Zustandsinformationen) aus geschlossenen, ggf. hohe Sicherheitsanforderungen erfüllenden Netzen (z.B. Automatisierungsnetze, Industrial Control Systems, ICS) zu extrahieren und in externen Systemen ggf. mit einer im Vergleich niedrigeren Sicherheitsstufe oder allgemein mit unterschiedlichen Sicherheitseigenschaften auszuwerten. Beispiele hierfür sind die Anbindung an externe oder zentrale Intrusion Detection Systems (IDS), um Anomalien in der Kommunikation von Automatisierungsnetzen zu erkennen. Ferner dienen NetzwerkTaps und Edge-Devices auch zur Anbindung an (z.B. Cloudbasierte) Datenanalyse-Plattformen für den Zweck, vorausschauende Wartungen und Optimierungen umzusetzen (remote monitoring; predictive maintenance).
Anbieter solcher höherwertigen Dienste wenden häufig Lizensierungsmodelle an, welche sich auf die Art und Qualität der zu bewertenden Daten beziehen. Damit geht auch die Qualität der von den Diensten gelieferten Ergebnisse einher. Die Analyse bestimmter Netzwerkprotokolle (deep packet inspection) erfordert detailliertes (mitunter geschütztes) Wissen über die jeweiligen Protokolle, welches wertvoll ist und daher nur unter entsprechender Lizenz nutzbar ist. Ähnliches gilt für die Anbindung von Netzen über Edge-Devices, welche nur auf Basis vorliegender Lizenzen bestimmte Datentypen oder Protokolle unterstützen und an Cloud-Systeme weiterleiten sollen. Normalerweise wird eine Lizenzauswertung und damit Filterung der Daten im Backend und damit gegen Ende der Verarbeitungskette erledigt.

Es ist Aufgabe der vorliegenden Erfindung, eine Datenübertragung zwischen zwei Netzwerken mit einer verbesserten Datenfilterung bzw. Lizenzkontrolle zu schaffen.

Die Aufgabe wird durch die in den unabhängigen Ansprüchen beschriebenen Merkmale gelöst. In den abhängigen Ansprüchen sind vorteilhafte Weiterbildungen der Erfindung beansprucht.

Die Erfindung beansprucht ein Verfahren zur Datenübertragung zwischen Netzwerken, insbesondere mit unterschiedlicher Sicherheitsanforderung, wobei
- für eine Datenübertragung von einem ersten Netzwerk in ein zweites Netzwerk Daten mithilfe physikalischen Abtastens durch wenigstens eine Abtasteinheit, die zwischen dem ersten Netzwerk und dem zweiten Netzwerk angeordnet ist, an zumindest eine Filtereinheit übertragen werden
   und
- wobei die abgetasteten Daten nach dem Abtasten anhand zumindest einer vorgegebenen Regel in der Filtereinheit geprüft werden und
- bei positivem Prüfungsergebnis die Daten in das zweite Netzwerk übertragen werden.

Die Filtereinheit ist vorzugsweise der Abtasteinheit unmittelbar (örtlich nah) nachgeordnet. Die abgetasteten Daten sollten direkt (zeitlich nah) nach dem Abtasten anhand zumindest einer vorgegebenen Regel geprüft werden. Die Regel kann eine festcodierte oder programmierbare/vorgebbare Lizenz bzw. Nutzungserlaubnis sein. Die Datenübertragung kann drahtgebunden, optisch, akustisch oder funkbasiert erfolgen. Dabei kann vor und nach der Filtereinheit die gleiche Art der Datenübertragung oder eine unterschiedliche Art der Datenübertragung verwendet werden.

Folgende Arten von Lizenzschutz können realisiert werden:
- Einschränkung nach Art der Kommunikation (z.B. Protokoll OPC UA, Dateitransfer)
- Steuerung der Datenqualität bzw. Abtastrate (Sampling, z.B. höhere Abtastraten von Controllern werden nur bei bestimmten Lizenzen angeboten)
- Zeitliche Einschränkungen (z.B. kontinuierlich oder nur wiederholt möglich; Nutzungsdauer)

Weitere Arten an Lizenzprüfungen sind denkbar, die gezeigte Auflistung stellt nur eine beispielhafte Auswahl dar.

Eine Hardware-basierter Lizenzprüfung bietet gegenüber Software-basierten Lösungen in der Regel einen deutlich besseren Schutz vor Manipulation und Angriffen, die ein Umgehen der Lizenzprüfung zum Ziel haben. Da die Prüfung in Hardware implementiert und damit fest an das jeweilige Gerät bzw. eine Vorrichtung gebunden ist, ist auch kein zusätzlicher Schutz für Lizenzschlüssel oder Lizenzbedingungen notwendig. Durch die Umsetzung der Lizenzprüfung unmittelbar an der Stelle des Datenabgriffes (d.h. beim Network Capturing), werden die Daten bereits an einer frühestmöglichen Stelle gefiltert. Dadurch wird die Datenmenge reduziert und es wird damit weniger Bandbreite benötigt und/oder der Aufwand in späteren Datenverarbeitungsschritten verringert. Diese Filterung hat weiterhin den Vorteil, dass verlässlich sichergestellt wird, dass ausschließlich Daten entsprechend der konfigurierten Lizenz das erste Netzwerk verlassen können. Dadurch kann ein unerwünschter Informationsabfluss verlässlich verhindert werden.

Die wenigstens eine Abtasteinheit bzw. Ausleseeinheit kann zumindest zwei getrennte Abtasteinheiten mit jeweils einer zugehörigen Filtereinheiten umfassen, wobei die zugehörigen Filtereinheiten eine gemeinsame Filtereinheit oder zwei voneinander getrennte Filtereinheiten bilden können.

Eine Weiterbildung der Erfindung sieht vor, dass die Datenübertragung zwischen dem ersten Netzwerk und dem zweiten Netzwerk rückwirkungsfrei und gegebenenfalls unidirektional ausgestaltet ist.

Eine Weiterbildung der Erfindung sieht vor, dass das physikalische Abtasten passiv durchgeführt wird.

Eine Weiterbildung der Erfindung sieht vor, dass die zumindest eine vorgegebene Regel kryptographisch geschützt wird bzw. ist.

Daten können nur dann weitergeleitet werden, wenn eine kryptographisch geschützte Regel konfiguriert ist. Das bedeutet, dass ohne eine konfigurierte Regel, die eine gültige kryptographische Prüfsumme aufweist, keine Daten weitergeleitet werden.

Daten können nur dann weitergeleitet werden, wenn eine kryptographische Prüfsumme der kryptographisch geschützten Regel überprüft ist.

Eine Weiterbildung der Erfindung sieht vor, dass nach der Prüfung in der Filtereinheit bzw. nach der Filterung vor der Übertragung der Daten in das zweite Netzwerk diese in einen Speicherbereich zu einer Weiterverarbeitung geschrieben werden.

Ein weiterer Aspekt der Erfindung sieht vor, dass für eine Datenübertragung vom zweiten Netzwerk ins erste Netzwerk weitere Daten mithilfe physikalischen Abtastens durch dieselbe oder eine weitere Abtast- bzw. Ausleseeinheit an dieselbe oder eine weitere Filtereinheit, die zwischen dem ersten Netzwerk und dem zweiten Netzwerk angeordnet ist, übertragen werden,
- wobei die abgetasteten Daten direkt nach dem Abtasten anhand zumindest der vorgegebenen oder einer weiteren vorgebbaren Regel (z.B. eine Lizenz) in der Filtereinheit oder in der zweiten Filtereinheit geprüft werden und
- wobei bei positivem Prüfungsergebnis die weiteren Daten in das erste Netzwerk übertragen werden.

Ein weiterer Aspekt der Erfindung sieht eine Kommunikationseinheit vor, die zur Datenübertragung zwischen Netzwerken, insbesondere mit unterschiedlichen Sicherheitsanforderungen, geeignet ist, aufweisend:
- wenigstens eine Abtasteinheit, die dazu ausgelegt ist, für eine Datenübertragung von einem ersten Netzwerk in ein zweites Netzwerk Daten mithilfe physikalischen Abtastens an zumindest eine der Abtasteinheit unmittelbar (örtlich nah) nachgeordneten Filtereinheit zu übertragen,
- wobei die abgetasteten Daten direkt (zeitlich nah) nach dem Abtasten anhand zumindest einer vorgegebenen Regel in der Filtereinheit prüfbar und
- bei positivem Prüfungsergebnis die Daten in das zweite Netzwerk übertragbar sind.

Die Kommunikationseinrichtung kann zudem mindestens eine solche Filtereinheit aufweisen.

Die Kommunikationseinrichtung kann einen Speicherbereich umfassen, der dazu ausgelegt ist, dass vor der Übertragung der Daten in das zweite Netzwerk diese in diesen Speicherbereich zu einer Weiterverarbeitung geschrieben werden können.

Das Verfahren ist vorzugsweise computerimplementiert. Unter "computerimplementiert" kann im Zusammenhang mit der Erfindung eine Implementierung des Verfahrens verstanden werden, bei dem insbesondere ein Prozessor mindestens einen Verfahrensschritt ausführt.

Eine Weiterbildung der Erfindung sieht vor, dass
eine Einrichtung, Einheit bzw. Komponente, insbesondere eine Kommunikationseinheit/-einrichtung bzw. Netzwerkkomponente, als eine Hardware-Komponente ausgebildet ist. Eine Komponente kann einen Prozessor umfassen.

Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

Des Weiteren betrifft die Erfindung ein Computerprogrammprodukt, das direkt in einen programmierbaren Computer ladbar ist, umfassend Programmcodeteile, die dazu geeignet sind, die Schritte eines erfindungsgemäßen computerimplementierten Verfahrens durchzuführen. Der Computer bzw. die Recheneinheit können in die Kommunikationseinrichtung integriert sein.

Ein Computerprogrammprodukt, wie zum Beispiel ein Computerprogramm-Mittel, kann beispielsweise als Speichermedium oder Datenträger, wie zum Beispiel als Speicherkarte, USB-Stick, CD-ROM, DVD oder auch in Form einer herunterladbaren Datei von einem Server in einem Netzwerk bereitgestellt oder geliefert werden.

Die Vorrichtungen, Einrichtungen, Einheiten bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigen:
- Fig. 1: eine erste erfindungsgemäße Ausführungsform für einen Netzwerktap mit einer Prüfung der Daten anhand zumindest einer vorgegebenen Regel,
- Fig. 2: eine zweite erfindungsgemäße Ausführungsform für einen Netzwerktap mit einer Prüfung der Daten anhand zumindest einer vorgegebenen Regel und
- Fig. 3: eine dritte erfindungsgemäße Ausführungsform für einen Netzwerktap mit einer Prüfung der Daten anhand zumindest einer vorgegebenen Regel.

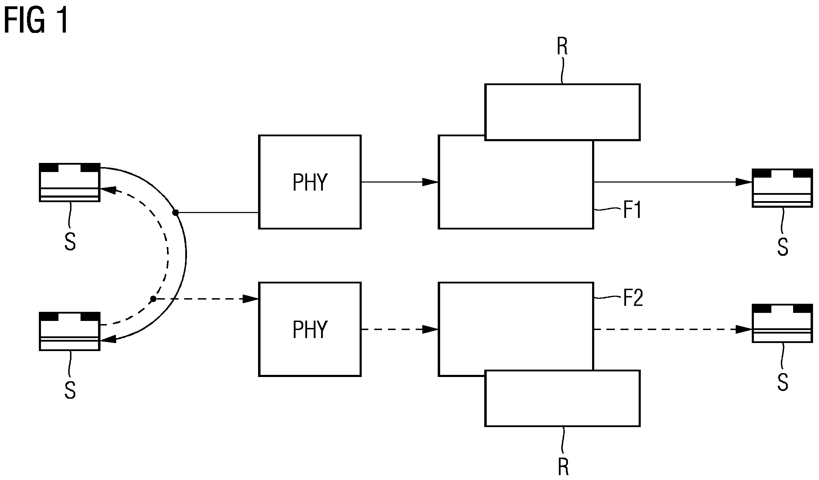

Figur 1 stellt eine erfindungsgemäße Ausführungsform für einen Netzwerktap mit einer Prüfung der Daten anhand zumindest einer vorgegebenen Regel z.B. einer Lizenz dar, wobei die Prüfung vorzugsweise in Hardware oder in Firmware implementiert sein kann. Dabei wird jede der Verbindungsstrecken (durchgezogene und gestrichelte Linie) zwischen zwei verbundenen Netzwerkschnittstellen S passiv (d.h. rückwirkungsfrei, z.B. über eine induktive Kopplung) abgegriffen. Die Abtasteinheit in Form eines Adapters weist eine PHY-Schnittstelle auf, über die auf physikalischer Ebene die Daten abgetastet bzw. abgegriffen und an eine Filtereinheit F weitergeleitet werden. Da, wie in der Figur dargestellt, der Abgriff für jede Richtung getrennt erfolgt, erfolgt die Weiterleitung an zwei identisch ausgeprägte Filtereinheiten, die im Ausführungsbeispiel dieselbe Regel R oder dieselben Regeln umsetzen. Es ist jedoch auch möglich, dass die Filterung richtungsabhängig erfolgt, d.h. unterschiedlich für eingehende und ausgehende Datenpakete.

Die Filterung zur Durchsetzung der von einer möglichen Lizenz abhängig definierten Regel selbst ist vorzugsweise in Hardware implementiert. Ein Beispiel für eine Regel ist etwa eine Datenfilterung nach Protokollart. So kann - je nach Anwendungsfall - z.B. eine Filterung von OPC UA Kommunikation erfolgen, wenn das Netzwerktap und die anschließende Datenverarbeitung/-analyse speziell für OPC UA lizensiert sind. Dann wird eine Datenübertragung nach z.B. nach PROFINET ausgeschlossen. Es ist möglich, anwendungsfallspezifische Implementierungen auf allen Schichten des OSI-Referenzmodells (ab Schicht 2) umzusetzen. Die gefilterten Daten werden anschließend an zwei Netzwerkschnittstellen weitergeleitet, über die Analysesysteme angeschlossen werden können. Im dargestellten Beispiel sind die Regeln R fest vorgegeben (hard coded ruleset). Abhängig von der vorliegenden Lizenz können eine vorgegebene Regel oder mehrere Regeln ausgewählt und aktiviert werden. Dazu wird die Gültigkeit des Lizenzcodes (in Hardware) geprüft und davon abhängig werden ein oder mehrere Regeln zur Filterung ausgewählt. In einer Ausführungsform werden die Regeln durch die Lizenz spezifiziert, d.h. sind in der Lizenzinformation einkodiert.
Die Lizenzinformation kann dabei kryptographisch geschützt sein und an die Hardware einer Kommunikationseinrichtung z.B. IoT-Gateway gebunden sein.
Es ist eine unidirektionale wie auch eine herkömmliche bidirektionale Schnittstelle der Kommunikationseinrichtung denkbar.

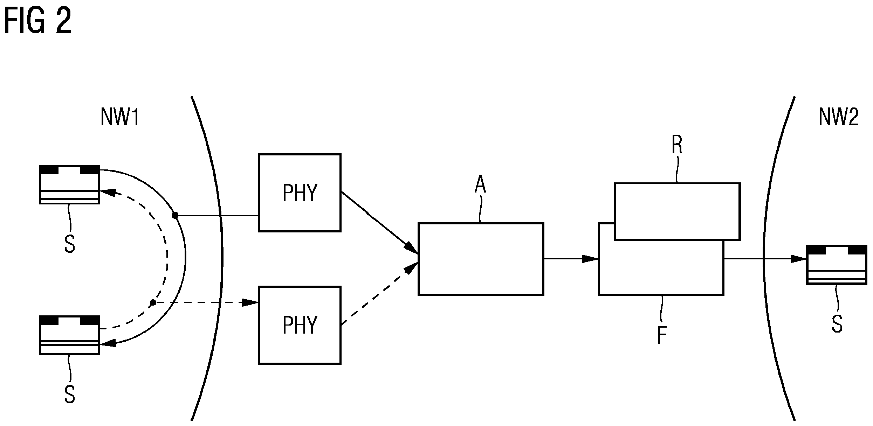

Figur 2 zeigt ein Netzwerktap, das derart ausgestaltet ist, dass die abgegriffenen Daten der beiden Richtungen (durchgezogene und gestrichelte Linie) zunächst über sogenannte Capture Engine A aggregiert bzw. kombiniert werden, ehe diese in einer Filtereinheit F abhängig von der vorliegenden Regel gefiltert werden. Figur 2 stellt somit eine optimierte Form des in Figur 1 gezeigten Ansatzes dar, bei der die Ausgabe auf einen Strom zusammengeführt wird.

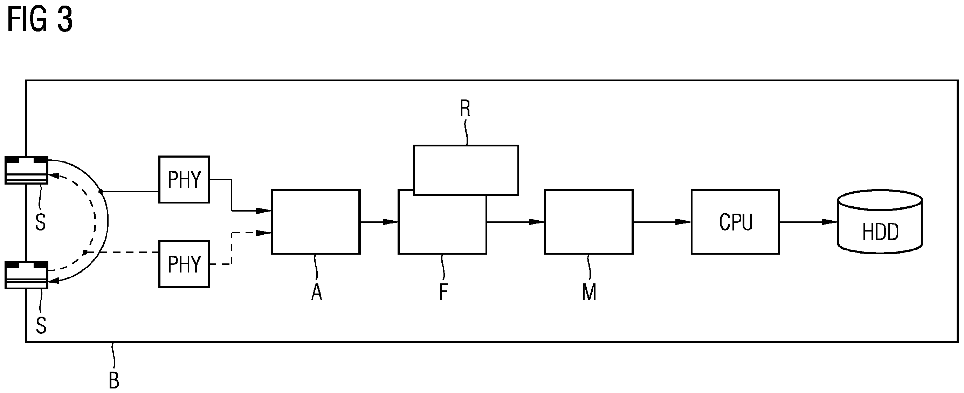

Figur 3 zeigt eine erfindungsgemäße Ausführungsform zur Umsetzung einer BlackBox B zum gesicherten Aufzeichnen lizensierter Kommunikationsdaten. So kann eine Blackbox etwa in der Art ausgestaltet sein, dass sie nur bestimmte Status- und Steuersignale in einem (ersten) Netzwerk z.B. ein Kontrollnetzwerk aufzeichnet (etwa OPC UA Signale in Automatisierungsnetzwerken).

Hierbei wird - wie vorstehend beschrieben - die Netzwerkkommunikation beider Datenübertragungsrichtungen über einen Netzwerktap passiv abgetastet. Die getrennt aufgezeichneten Kommunikationsrichtungen werden über eine Capture Engine A zusammengeführt und anschließend über die Filtereinheit F gemäß der Regel(n) gefiltert. Anschließend werden die Daten nicht über eine Netzwerkschnittstelle weitergegeben, sondern zuerst in einen Speicherbereich M geschrieben. Dieser kann von einem Computer bzw. einer Rechnereinheit CPU ausgelesen und von dieser durch ein Softwareprogramm weiterverarbeitet werden. In der gezeigten Ausführungsvariante werden die gefilterten Daten protokolliert und persistent auf einen angeschlossen Speicher HDD gesichert.

Eine weitere erfindungsgemäße Ausführungsform stellt ein Edge-Device mit in Hardware implementierter Prüfung dar. Die Ausführung ist hierbei unidirektional umgesetzt und basiert im Wesentlichen auf dem in Figur 3 gezeigten Ansatz. Anstelle oder zusätzlich zu einer lokalen Sicherung/Archivierung der aufgezeichneten Daten auf einer Festplatte HDD oder anderem Speichermedium, wird durch ein Softwareprogramm auf der Rechnereinheit CPU eine Anbindung an ein Cloud-Backend (wie z.B. MindSphere, https://siemens.mindsphere.io/en) umgesetzt. Diese Cloud kann als ein zweites Netzwerk NW2 (in Figur 3 nicht dargestellt) angesehen werden. Daten können somit unidirektional aus der Anlage abgegriffen und an ein Cloudbackend weitergeleitet werden. Welche Daten weitergegeben werden, ist durch die Regel(n), welche vorzugsweise in Hardware implementiert ist, geregelt. Beispielsweise können auch hier nur "OPC UA"-Daten extrahiert und in Richtung Cloudsystem gesendet werden. So sind unterschiedliche Varianten des Edge Devices, welche unterschiedliche Protokolle unterstützen, auf Basis derselben Hardwareplattform denkbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Datenübertragung zwischen Netzwerken, insbesondere mit unterschiedlicher Sicherheitsanforderungen, wobei
- für eine Datenübertragung von einem ersten Netzwerk (NW1) in ein zweites Netzwerk (NW2) Daten mithilfe physikalischen Abtastens durch wenigstens eine Abtasteinheit (PHY), die zwischen dem ersten Netzwerk (NW1) und dem zweiten Netzwerk (NW2) angeordnet ist, an zumindest eine Filtereinheit übertragen werden
und
- wobei die abgetasteten Daten direkt nach dem Abtasten anhand zumindest einer vorgegebenen Regel (R) in der Filtereinheit (F) geprüft werden und
- bei positivem Prüfungsergebnis die Daten in das zweite Netzwerk (NW2) übertragen werden.

2. Verfahren nach dem vorhergehenden Anspruch, **dadurch gekennzeichnet, dass** die Datenübertragung zwischen dem ersten Netzwerk und dem zweiten Netzwerk rückwirkungsfrei ausgestaltet ist.

3. Verfahren nach einem der vorhergehenden Ansprüche, **dadurch gekennzeichnet, dass** das physikalische Abtasten passiv durchgeführt wird.

4. Verfahren nach einem der vorhergehenden Ansprüche, **dadurch gekennzeichnet, dass** die zumindest eine vorgegebene Regel kryptographisch geschützt wird oder ist.

5. Verfahren nach einem der vorhergehenden Ansprüche, **dadurch gekennzeichnet, dass** nach dem Prüfen in der Filtereinheit vor der Übertragung der Daten in das zweite Netzwerk diese in einen Speicherbereich (M) zu einer Weiterverarbeitung geschrieben werden.

6. Verfahren nach dem vorhergehenden Anspruch, **dadurch gekennzeichnet, dass** für eine Datenübertragung vom zweiten Netzwerk (NW2) ins erste Netzwerk (NW1) weitere Daten mithilfe physikalischen Abtastens durch dieselbe oder eine weitere Abtasteinheit an dieselbe oder eine weitere Filtereinheit (F1), die zwischen dem ersten Netzwerk (NW1) und dem zweiten Netzwerk (NW2) angeordnet ist, übertragen werden,
- wobei die abgetasteten Daten direkt nach dem Abtasten anhand zumindest der vorgegebenen oder einer weiteren vorgebbaren Regel in der Filtereinheit (F1) oder in der weiteren Filtereinheit (F2) geprüft werden und
- wobei bei positivem Prüfungsergebnis die weiteren Daten in das erste Netzwerk (NW1) übertragen werden.

7. Kommunikationseinrichtung geeignet zur Datenübertragung zwischen Netzwerken, insbesondere mit unterschiedlicher Sicherheitsanforderungen, aufweisend:
- wenigstens eine Abtasteinheit (PHY), die dazu ausgelegt ist, für eine Datenübertragung von einem ersten Netzwerk (NW1) in ein zweites Netzwerk (NW2) Daten mithilfe physikalischen Abtastens an zumindest eine der Abtasteinheit unmittelbar nachgeordneten Filtereinheit (F; F1, F2) zu übertragen,
- wobei die abgetasteten Daten direkt nach dem Abtasten anhand zumindest einer vorgegebenen Regel in der Filtereinheit prüfbar und
- bei positivem Prüfungsergebnis die Daten in das zweite Netzwerk (NW2) übertragbar sind.

8. Kommunikationseinrichtung nach Anspruch 7, **gekennzeichnet durch** mindestens eine solche Filtereinheit.

9. Kommunikationseinrichtung nach Anspruch 8, **gekennzeichnet durch** einen Speicherbereich (M), der dazu ausgelegt ist, dass vor der Übertragung der Daten in das zweite Netzwerk diese in diesen Speicherbereich zu einer Weiterverarbeitung geschrieben werden können.

10. Computerprogrammprodukt, das in einen programmierbaren Computer ladbar ist, umfassend Programmcodeteile, die dazu geeignet sind, die Schritte des Verfahrens nach einem vorhergehenden Verfahrensansprüche durchzuführen.
